# EUROPEAN PATENT SPECIFICATION

(11) **EP 2 278 836 B1**
(45) Date of publication and mention of the grant of the patent: **28.11.2012**
(21) Application number: 10006713.1
(22) Date of filing: 29.06.2010
(51) Int. Cl.: H04W 36/00

(54) **Method and apparatus for handling inter-RAT handover**
Verfahren und Vorrichtung zur Handhabung der Übergabe zwischen Funkzugangstechnologien
Procédé et appareil pour traiter un transfert inter-rat

(30) Priority: 29.06.2009 US 221093 P
(43) Date of publication of application: 26.01.2011
(73) Proprietor: Innovative Sonic Corporation, Taipei City (TW)
(72) Inventor: Ou, Meng-Hui, Peitou Taipei City (TW)
(74) Representative: Görz, Ingo

(56) References cited:
- PANASONIC: "Timers and constants values used during handover to E-UTRA" 3GPP DRAFT; R2-090097, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090106, 6 January 2009 (2009-01-06), XP050322138 [retrieved on 2009-01-06]
- DAS D ET AL: "Evaluation of mobile handset recovery from radio link failure in a multi-RATS environment" INTERNET MULTIMEDIA SERVICES ARCHITECTURE AND APPLICATIONS, 2008. IMSAA 2008. 2ND INTERNATIONAL CONFERENCE ON, IEEE, PISCATAWAY, NJ, USA, 10 December 2008 (2008-12-10), pages 1-6, XP031408578 ISBN: 978-1-4244-2684-3
- ERICSSON ET AL: "Providing per QCI radio link failure timers" 3GPP DRAFT; R2-093802 PER QCI RADIO-LINK FAILURE TIMERS-V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050352019 [retrieved on 2009-06-23]
- ERICSSON ET AL: "Dedicated signalling of Radio Link Failure timers/counters" 3GPP DRAFT; R2-093803 DEDICATED RLF TIMERS CR R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050352020 [retrieved on 2009-06-23]

## Description

The present invention relates to a method and apparatus for handling inter-RAT handover in a wireless communication system according to the pre-characterizing clauses of claims 1 and 5.

Long Term Evolution (LTE) wireless communication system, an advanced high-speed wireless communication system established upon the 3G mobile telecommunication system, supports only packet-switched transmission, and tends to implement both Medium Access Control (MAC) layer and Radio Link Control (RLC) layer in one single communication site, such as in base stations (Node Bs) alone rather than in Node Bs and RNC (Radio Network Controller) respectively, so that the system structure becomes simple.

In LTE system, to keep an effective connection between a user equipment (UE) and a Node B after the connection is established, the UE starts a timer T310 if the UE detects a radio link problem, e.g. the UE detects consecutive "out-of-sync" indications from a physical layer. The number of consecutive "out-of-sync" indications is defined by a configurable constant N310. If the radio link problem is not recovered before the timer T310 expires, the UE determines a radio link failure (RLF) occurs, and triggers an RRC connection re-establishment procedure, to re-establish a normal connection.

Besides, when the timer T310 is running, the UE shall stop the timer T310 if the radio link problem is recovered, e.g. the UE receives consecutive "in-sync" indications from a physical layer. The number of consecutive "in-sync" indications is defined by a configurable constant N311.

When the RRC connection re-establishment procedure is initiated, the UE starts a timer T311 to control the duration of cell selection. If the UE cannot successfully complete a cell selection procedure before expiry of the timer T311, or the cell selected by the UE belongs to other radio access technology (RAT), then the connection is determined not able to be recovered, and the UE enters into an RRC idle mode. Detailed operations of the RLF timers and constants can be referred in related technical specifications, and is not given herein.

According to the current specifications (3GPP TS 36.331 v8.5.0, "E-UTRA RRC Protocol Specification (Release 8)"), configurations of the RLF related timers and constants are transmitted by the network via system information broadcast. That means, all UEs in a cell are configured with the same RLF timers and constants. To define a set of default values for timers and constants, T310/N310/N311 and T311 for inter-RAT handover and to adapt default values for timers and constants, T310/N310/N311 and T311 in SIB2 is proposed in the 3GPP meeting document R2-090097.

However, in the 3GPP meeting document R2-093802, it is considered that having a single setting for all RLF related timers and constants in a cell where wide range of services with different Quality of Service (QoS) classes and delay requirements may be deployed is seen as non-optimal. Thus, the 3GPP meeting document R2-093803 proposes to use a new RRC parameter, i.e. an information element (IE) rlf-TimersAndConstants, to configure the RLF timers and constants of each UE, respectively. The IE rlf-TimersAndConstants is included in an IE RadioResourceConfigDedicated, while the IE RadioResourceConfigDedicated is transmitted in an RRC Connection Reconfiguration message for carrying UE specific RRC configurations.

When the UE moves from another communication system such as an Universal Mobile Telecommunications System (UMTS), for example, to the LTE system, the UE performs an inter-RAT handover procedure, e.g. a handover to evolved universal terrestrial radio access (E-UTRA) procedure. The inter-RAT handover (e.g. handover to E-UTRA) procedure is performed by the network with other radio access technology sending the RRC Connection Reconfiguration message to the UE, for re-configuring the UE. However, if the text proposal in R2-093803 is adopted in the specifications, when the RRC Connection Reconfiguration message is received in the inter-RAT handover (e.g. handover to E-UTRA) procedure, the UE still uses the default values to configure the timers T310, T311 and the constants N310, N311.

In this case, even if the RRC Connection Reconfiguration message includes the IE rlf-TimersAndConstants, the UE specific configuration in the IE rlf-TimersAndConstants can never be applied to the RLF timers and constants of the UE, such that the system performance is affected. Thus, there is a need to solve this problem.

This in mind, the present invention aims at providing a method and apparatus for handling inter-RAT handover in a user equipment (UE) of a wireless communication system, to effectively configure radio link failure timers and constants.

This is achieved by a method and apparatus for handling inter-RAT handover in a user equipment (UE) of a wireless communication system according to the pre-characterizing clauses of claims 1 and 5. The dependent claims pertain to corresponding further developments and improvements.

As will be seen more clearly from the detailed description following below, the present invention discloses a method for handling inter-RAT handover in a user equipment (UE) of a Long Term Evolution (LTE) wireless communication system. The method includes steps of performing the handover procedure to handover the UE from another radio access technology communication system to the wireless communication system; receiving an RRC Connection Reconfiguration message; and configuring radio link failure timers and constants of the UE according to whether the RRC Connection Reconfiguration message includes an UE specific configuration parameter for the radio link failure timers and constants, which comprises: using the UE specific configuration parameter to configure the radio link failure timers and constants of the UE when the RRC Connection Reconfiguration message includes the UE specific configuration parameter, and /or using a default configuration to configure the radio link failure timers and constants of the UE when the RRC Connection Reconfiguration message does not include the UE specific configuration parameter.

In the following, the invention is further illustrated by way of example, taking reference to the accompanying drawings. Thereof
FIG.1 is a schematic diagram of a wireless communications system.
FIG.2 is a function block diagram of a wireless communications device.
FIG.3 is a diagram of a program of FIG.2.
FIG.4 is a flowchart of a process according to an embodiment of the present invention.

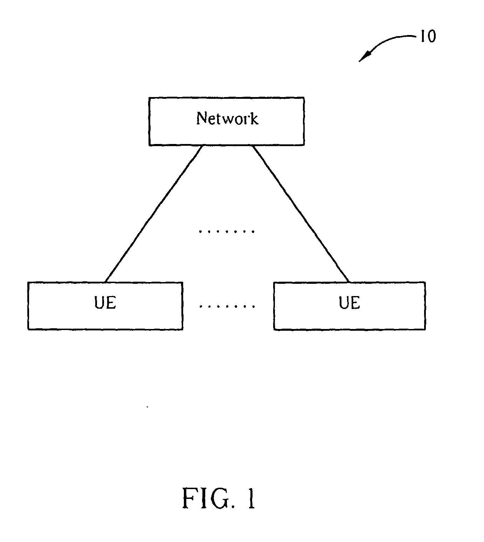

Please refer to FIG.1, which illustrates a schematic diagram of a wireless communications system 10. The wireless communications system 10 is preferred to be a Long Term Evolution (LTE) wireless communication system, and is briefly composed of a network and a plurality of user equipments (UEs) In FIG.1, the network and the UEs are simply utilized for illustrating the structure of the wireless communications system 10. Practically, the network may comprise a plurality of base stations (Node Bs), radio network controllers and so on according to actual demands, and the UEs can be devices such as mobile phones, computer systems, etc.

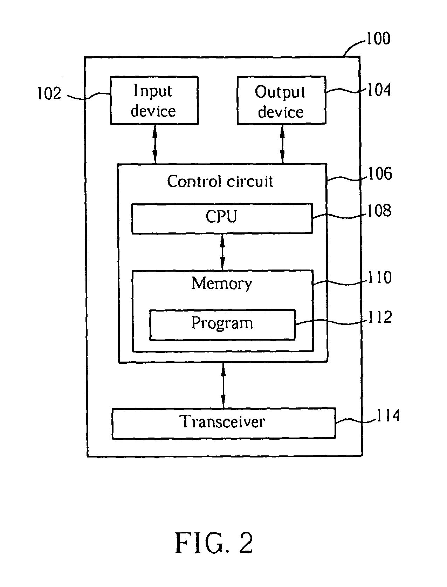

Please refer to FIG.2, which is a functional block diagram of a communications device 100 in a wireless communications system. The communications device 100 can be utilized for realizing the UEs or the network in FIG.1. For the sake of brevity, FIG. 2 only shows an input device 102, an output device 104, a control circuit 106, a central processing unit (CPU) 108, a memory 110, a program 112, and a transceiver unit 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver unit 114 is used to receive and transmit wireless signals, delivering received signals to the control circuit 106, and outputting signals generated by the control circuit 106 wirelessly. From a perspective of a communications protocol framework, the transceiver unit 114 can be seen as a portion of Layer 1, and the control circuit 106 can be utilized to realize functions of Layer 2 and Layer 3.

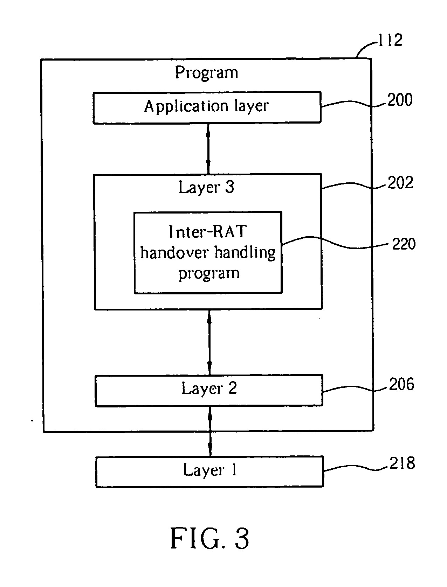

Please continue to refer to FIG.3. FIG.3 is a diagram of the program 112 shown in FIG.2. The program 112 includes an application layer 200, a Layer 3 202, and a Layer 2 206, and is coupled to a Layer 1 218. The Layer 3 202 performs radio resource control. The Layer 2 206 comprises a Radio Link Control (RLC) layer and a Medium Access Control (MAC) layer, and performs link control. The Layer 1 218 performs physical connections.

In the LTE system, the Layer 3 202 is configured with radio link failure timers and constants, for controlling radio link failure related actions. Detailed operations can be referred to the prior art, and is not narrated again herein. Besides, the network sends an UE specific configuration parameter, i.e. an information element (IE) rlf-TimersAndConstants to the UE via an RRC Connection Reconfiguration message, to configure the RLF timers and constants of each UE, respectively. As a result, UEs in a cell can have different configurations of radio link failure timers and constants, to meet different QoS and delay requirements.

When the UE moves from another communication system such as an Universal Mobile Telecommunications System (UMTS), for example, to the LTE system, the UE performs an inter-RAT (Radio Access Technology) handover procedure, e.g. a handover to E-UTRA procedure. The inter-RAT handover (e.g. handover to E-UTRA) procedure is performed by the network with other radio access technology sending the RRC Connection Reconfiguration message to the UE, for re-configuring the UE. However, in the prior art, no matter whether the RRC Connection Reconfiguration message includes the IE rlf-TimersAndConstants, the UE always uses default values to configure the timers T310, T311 and the constants N310, N311, resulting in that the UE specific configuration cannot be applied in the inter-RAT handover (e.g. handover to E-UTRA) procedure.

In such a situation, the embodiment of the present invention provides an inter-RAT handover handling program 220 in the program 112, for effectively performing the inter-RAT handover procedure to solve the problem that the UE specific configuration of the RLF timers and constants cannot be applied, so as to enhance the system performance.

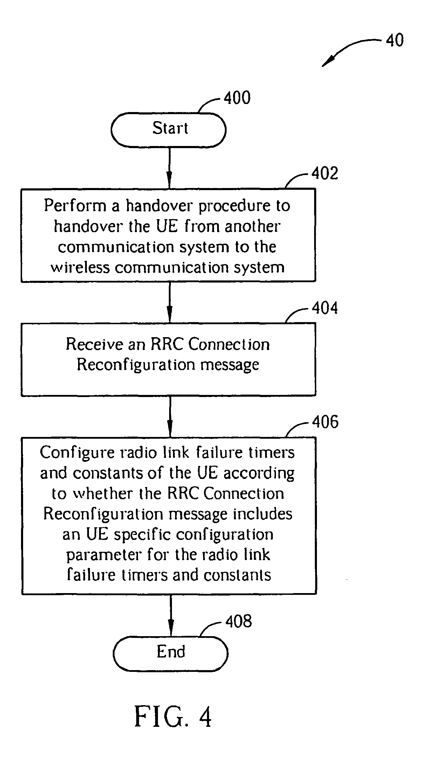

Please refer to FIG.4, which illustrates a schematic diagram of a process 40. The process 40 is utilized for performing inter-RAT handover in an UE of the wireless communications system 10, and can be compiled into the inter-RAT handover handling program 220. The process 40 includes the following steps:
Step 400: Start.
Step 402: Perform a handover procedure to handover the UE from another communication system to the wireless communication system.
Step 404: Receive an RRC Connection Reconfiguration message.
Step 406: Configure radio link failure timers and constants of the UE according to whether the RRC Connection Reconfiguration message includes an UE specific configuration parameter for the radio link failure timers and constants.
Step 408: End.

According to the process 40, the UE performs the inter-RAT handover procedure to handover the UE from another communication system to the wireless communication system. In the inter-RAT handover procedure, when the RRC Connection Reconfiguration message is received, the UE configures the radio link failure timers and constants according to whether the RRC Connection Reconfiguration message includes the UE specific configuration parameter for the radio link failure timers and constants.

In the embodiment of the present invention, the UE specific configuration parameter is the IE rlf-TimersAndConstants. Besides, the radio link failure timers and constants can be a timer T310, a timer T311, a constant N310 or a constant N311, but are not limited to these.

Therefore, when the RRC Connection Reconfiguration message is received in the inter-RAT handover (e.g. handover to E-UTRA) procedure, the UE shall first determine whether the RRC Connection Reconfiguration message includes the IE rlf-TimersAndConstants.

When the RRC Connection Reconfiguration message includes the IE rlf-TimersAndConstants, the UE uses the values in the IE rlf-TimersAndConstants to configure the radio link failure timers and constants. Conversely, when the RRC Connection Reconfiguration message does not include the IE rlf-TimersAndConstants, the UE then uses default values to configure the radio link failure timers and constants.

Consequently, the UE can apply the UE specific configuration for the radio link failure timers and constants in the inter-RAT handover (e.g. handover to E-UTRA) procedure immediately. Such that no additional RRC Connection Reconfiguration message is required to send the UE specific configuration after the inter-RAT handover (e.g. handover to E-UTRA) procedure is complete.

In summary, when the UE receives the RRC Connection Reconfiguration message due to handover to the LTE system, the UE determines to apply the UE specific configuration for the radio link failure timers and constants when the RRC Connection Reconfiguration message includes the IE rlf-TimersAndConstants. As a result, in the embodiment of the present invention, the radio link failure timers and constants can be configured effectively.

## Claims

1. A method for handling inter radio access technology, named inter-RAT hereinafter, handover in an user equipment, named UE hereinafter, of a Long Term Evolution, named LTE, wireless communication system (10), the method comprising:
performing the handover procedure to handover the UE from another radio access technology communication system to the wireless communication system(402);
receiving an RRC Connection Reconfiguration message(404); and
**characterized by**
configuring radio link failure timers and constants of the UE according to whether the RRC Connection Reconfiguration message includes an UE specific configuration parameter for the radio link failure timers and constants(406), which comprises:
using the UE specific configuration parameter to configure the radio link failure timers and constants of the UE when the RRC Connection Reconfiguration message includes the UE specific configuration parameter, and /or
using a default configuration to configure the radio link failure timers and constants of the UE when the RRC Connection Reconfiguration message does not include the UE specific configuration parameter.

2. The method of claim 1, **characterized in that** the UE specific configuration parameter is an Information Element, named IE hereinafter, rlf-TimersAndConstants.

3. The method according to any of the preceding claims, **characterized in that** the radio link failure timers and constants comprises a timer T310, a timers T311, a constant N310 and/or a constant N311.

4. The method according to any of the preceding claims, **characterized in that** the handover procedure is a handover to E-UTRA procedure.

5. A communication device (100) for handling inter-RAT handover in an UE of a Long Term Evolution, named LTE, wireless communication system (10), the communication device (100) comprising:
a processor (108) for executing a program (112); and
a storage device (110), coupled to the processor (108), for storing the program (112), wherein the program (112) comprises instructions, that when executed by said processor (108) cause said processor (108) to perform the following steps:
performing the handover procedure to handover the UE from another radio access technology communication system to the wireless communication system(402);
receiving an RRC Connection Reconfiguration message(404); and
**characterized by**
configuring radio link failure timers and constants of the UE according to whether the RRC Connection Reconfiguration message includes an UE specific configuration parameter for the radio link failure timers and constants(406), which comprises:
using the UE specific configuration parameter to configure the radio link failure timers and constants of the UE when the RRC Connection Reconfiguration message includes the UE specific configuration parameter, and/or
using a default configuration to configure the radio link failure timers and constants of the UE when the RRC Connection Reconfiguration message does not include the UE specific configuration parameter.

6. The communication device (100) of claim 5, **characterized in that** the UE specific configuration parameter is an Information Element, named IE hereinafter, rlf-TimersAndConstants.

7. The communication device (100) of any one of claims 5 to 6, **characterized in that** the radio link failure timers and constants comprises a timer T310, a timers T311, a constant N31 0 and/or a constant N311.

8. The communication device (100) of any one of claims 5 to 7, **characterized in that** the handover procedure is a handover to E-UTRA procedure.

## Patentansprüche

1. Verfahren zum Handhaben einer Übergabe zwischen verschiedenen Funkzugangstechnologien bzw. eines Inter Radio Access Technology, im Folgenden Inter-RAT genannt, Handovers in einem Anwenderendgerät, im Folgenden UE genannt, eines Langzeitentwicklungsdrahtloskommunikationssystems (10) bzw. eines Long Term Evolution, LTE genannt, Drahtloskommunikationssystems (10), wobei das Verfahren umfasst:
Durchführen der Handover-Prozedur zum Übergeben des UE von einem Kommunikationssystem einer anderen Funkzugangstechnologie an das Drahtloskommunikationssystem (402);
Empfangen einer Nachricht (404) zur Neukonfiguration einer Verbindung bzw. Empfangen einer RRC Connection Reconfiguration Message (404); und
**gekennzeichnet ist durch**
Konfigurieren von Funkverbindungsfehlertimern und Konstanten des UE in Abhängigkeit davon, ob die RRC Connection Reconfiguration Message einen UE-spezifischen Konfigurationsparameter für die Funkverbindungsfehlertimer und Konstanten (406) beinhaltet, welches umfasst:
Verwenden der UE-spezifischen Konfigurationsparameter zum Konfigurieren der Funkverbindungsfehlertimer und Konstanten des UE, wenn die RRC Connection Reconfiguration Message den UE-spezifischen Konfigurationsparameter beinhaltet, und/oder
Verwenden einer voreingestellten bzw. "Default"-Konfiguration zum Konfigurieren der Funkverbindungsfehlertimer und Konstanten des UE, wenn die RRC Connection Reconfiguration Message den UE-spezifischen Konfigurationsparameter nicht beinhaltet.

2. Verfahren nach Anspruch 1, **dadurch gekennzeichnet, dass** der UE-spezifische Konfigurationsparameter ein rlf-TimerUndKonstanten bzw. rlf-TimersAndConstants genanntes Informationselement, im Folgenden IE genannt, ist.

3. Verfahren nach einem der vorstehenden Ansprüche, **dadurch gekennzeichnet, dass** die Funkverbindungsfehlertimer und Konstanten einen Timer T31 0, einen Timer T311, eine Konstante N310 und/oder eine Konstante N311 umfassen.

4. Verfahren nach einem der vorstehenden Ansprüche, **dadurch gekennzeichnet, dass** die Handover-Prozedur ein Handover an eine E-UTRA-Prozedur bzw. ein Handover to E-UTRA procedure ist.

5. Kommunikationsvorrichtung (100) zum Handhaben eines inter-RAT Handovers in einem UE eines Long Term Evolution, LTE genannt, Drahtloskommunikationssystems (10), wobei die Kommunikationsvorrichtung (100) umfasst:
einen Prozessor (108) zum Ausführen eines Programms (112); und
eine mit dem Prozessor (108) gekoppelte Speichervorrichtung (110) zum Speichern des Programms (112), wobei das Programm (112) Befehle umfasst, welche, wenn sie durch den Prozessor (108) ausgeführt werden, den Prozessor (108) veranlassen, die folgenden Schritte durchzuführen:
Durchführen der Handover-Prozedur zum Übergeben des UE von einem Kommunikationssystem einer anderen Funkzugangstechnologie an das Drahtloskommunikationssystem (402);
Empfangen einer Nachricht (404) zur Neukonfiguration einer Verbindung bzw. Empfangen einer RRC Connection Reconfiguration Message (404); und
**gekennzeichnet durch**
Konfigurieren von Funkverbindungsfehlertimern und Konstanten des UE in Abhängigkeit davon, ob die RRC Connection Reconfiguration Message einen UE-spezifischen Konfigurationsparameter für die Funkverbindungsfehlertimer und Konstanten (406) beinhaltet, welches umfasst:
Verwenden der UE-spezifischen Konfigurationsparameter zum Konfigurieren der Funkverbindungsfehlertimer und Konstanten des UE, wenn die RRC Connection Reconfiguration Message den UE-spezifischen Konfigurationsparameter beinhaltet, und/oder
Verwenden einer voreingestellten bzw. "Default"-Konfiguration zum Konfigurieren der Funkverbindungsfehlertimer und Konstanten des UE, wenn die RRC Connection Reconfiguration Message den UE-spezifischen Konfigurationsparameter nicht beinhaltet.

6. Kommunikationsvorrichtung (100) nach Anspruch 5, **dadurch gekennzeichnet, dass** der UE-spezifische Konfigurationsparameter ein rlf-TimerUndKonstanten bzw. rlf-TimersAndConstants genanntes Informationselement, im Folgenden IE genannt, ist.

7. Kommunikationsvorrichtung (100) nach einem der Ansprüche 5 bis 6, **dadurch gekennzeichnet, dass** die Funkverbindungsfehlertimer und Konstanten einen Timer T310, einen Timer T311, eine Konstante N310 und/oder eine Konstante N311 umfassen.

8. Kommunikationsvorrichtung (100) nach einem der Ansprüche 5 bis 7, **dadurch gekennzeichnet, dass** die Handover-Prozedur ein Handover an eine E-UTRA-Prozedur bzw. ein Handover to E-UTRA procedure ist.

## Revendications

1. Procédé pour prendre en charge le transfert inter-technologie d'accès radio, désigné inter-RAT ci-après, dans un équipement d'utilisateur, désigné UE ci-après, d'un système de communication sans fil (10) d'Evolution à Long. Terme, désignée LTE, le procédé comprenant :
l'exécution de la procédure de transfert pour transférer l'UE d'un autre système de communication de technologie d'accès radio au système de communication sans fil (402) ;
la réception d'un message de Reconfiguration de Connexion RRC (404) ; et
**caractérisé par**
la configuration de temporisateurs et de constantes de défaillance de liaison radio de l'UE en fonction de si le message de Reconfiguration de Connexion RRC comprend un paramètre de configuration spécifique à l'UE pour les temporisateurs et les constantes de défaillance de liaison radio (406), qui comprend :
l'utilisation du paramètre de configuration spécifique à l'UE pour configurer les temporisateurs et les constantes de défaillance de liaison radio de l'UE lorsque le message de Reconfiguration de Connexion RRC comprend le paramètre de configuration spécifique à l'UE, et/ou
l'utilisation d'une configuration par défaut pour configurer les temporisateurs et les constantes de défaillance de liaison radio de l'UE lorsque le message de Reconfiguration de Connexion RRC ne comprend pas le paramètre de configuration spécifique à l'UE.

2. Procédé selon la revendication 1, **caractérisé en ce que** le paramètre de configuration spécifique à l'UE est un Elément d'Information, désigné IE ci-après, rlf-TimersAndConstants.

3. Procédé selon l'une quelconque des revendications précédentes, **caractérisé en ce que** les temporisateurs et les constantes de défaillance de liaison radio comprennent un temporisateur T310, un temporisateur T311, une constante N310 et/ou une constante N311.

4. Procédé selon l'une quelconque des revendications précédentes, **caractérisé en ce que** la procédure de transfert est un transfert vers une procédure E-UTRA.

5. Dispositif de communication (100) pour prendre en charge le transfert inter-RAT dans un UE d'un système de communication sans fil (10) d'Evolution à Long Terme, désignée LTE, le dispositif de communication (100) comprenant :
un processeur (108) pour exécuter un programme (112) ; et
un dispositif de stockage (110), couplé au processeur (108), pour stocker le programme (112), où le programme (112) comprend des instructions qui, lorsqu'elles sont exécutées par ledit processeur (108), amènent ledit processeur (108) à effectuer les étapes suivantes :
l'exécution de la procédure de transfert pour transférer l'UE d'un autre système de communication de technologie d'accès radio au système de communication sans fil (402) ;
la réception d'un message de Reconfiguration de Connexion RRC (404) ; et
**caractérisé par**
la configuration de temporisateurs et de constantes de défaillance de liaison radio de l'UE en fonction de si le message de Reconfiguration de Connexion RRC comprend un paramètre de configuration spécifique à l'UE pour les temporisateurs et les constantes de défaillance de liaison radio (406), qui comprend :
l'utilisation du paramètre de configuration spécifique à l'UE pour configurer les temporisateurs et les constantes de défaillance de liaison radio de l'UE lorsque le message de Reconfiguration de Connexion RRC comprend le paramètre de configuration spécifique à l'UE, et/ou
l'utilisation d'une configuration par défaut pour configurer les temporisateurs et les constantes de défaillance de liaison radio de l'UE lorsque le message de Reconfiguration de Connexion RRC ne comprend pas le paramètre de configuration spécifique à l'UE.

6. Dispositif de communication (100) selon la revendication 5, **caractérisé en ce que** le paramètre de configuration spécifique à l'UE est un Elément d'Information, désigné IE ci-après, rlf-TimersAndConstants.

7. Dispositif de communication (100) selon l'une quelconque des revendications 5 à 6, **caractérisé en ce que** les temporisateurs et les constantes de défaillance de liaison radio comprennent un temporisateur T31 0, un temporisateur T311, une constante N310 et/ou une constante N311.

8. Dispositif de communication (100) selon l'une quelconque des revendications 5 à 7, **caractérisé en ce que** la procédure de transfert est un transfert vers une procédure E-UTRA.
